# EUROPEAN PATENT APPLICATION

(11) **EP 4 575 273 A1**
(43) Date of publication of application: **25.06.2025**
(21) Application number: 24221296.7
(22) Date of filing: 18.12.2024
(51) Int. Cl.: F16H 61/4131, F16H 61/4174, F15B 21/044

(54) **IMPROVED HYDRAULIC SYSTEM FOR A WORK VEHICLE AND RELATED WORK VEHICLE**

(30) Priority: 22.12.2023 IT 202300027930
(71) Applicant: CNH Industrial Italia S.p.A., 10156 Torino (IT)
(72) Inventor: Benevelli, Alessandro, 10156 Turin (IT); Riva, Marcello, 10156 Turin (IT); Coccetta, Michele, 10156 Turin (IT)
(74) Representative: CNH Industrial IP Department

(57) **Abstract**

A hydraulic system (5) for a work vehicle (1) comprising a source of pressurized hydraulic fluid (9), which is configured to suck hydraulic fluid from a tank (11) via a suction line (11a) and to provide at outlet a pressurized flow of said hydraulic fluid; a hydraulic utility (10), which is fluidly connected downstream said source of pressurized hydraulic fluid (9) and is configured to receive the pressurized flow of said hydraulic fluid; and a suction device (25), which is fluidly interposed between said source of pressurized hydraulic fluid (9) and said tank (11), is configured to suck the hydraulic fluid out of said suction line (11a) by means of vacuum pressure, and is configured as a venturi jet-pump.

## Description

### TECHNICAL FIELD

The present invention relates to an improved hydraulic system for a work vehicle and to a work vehicle equipped with such hydraulic system, in particular to an agricultural vehicle such as a tractor.

The present invention finds its preferred, although not exclusive, application in an arrangement for removing air from the hydraulic fluid flowing within a hydraulic system of a work vehicle. Reference will be made to this application by way of example below, without however losing in generality.

### BACKGROUND OF THE INVENTION

As is known, work vehicles such as agricultural vehicles are usually provided with a hydraulic system configured to power various utilities of the same work vehicles, such as a power steering system, hydraulically actuated braking devices, hydraulically actuated work implements, a hydraulically actuated driveline and/or the like.

For example, many work vehicles are provided with a hydraulically actuated continuous variable transmission (CVT) comprising a variable displacement hydrostatic pump carried by the internal combustion engine and a hydrostatic motor connected to the ground engaging wheels of the same work vehicle.

In addition, the aforementioned work vehicles are provided with a charging pump that sucks hydraulic fluid and provides a pressurized flow of hydraulic fluid toward the variable displacement hydraulic pump.

The presence of air bubbles within the hydraulic fluid flowing in the continuous variable transmission (CVT), however, causes many problems such as pump instability, cavitation, increased noise, and the like.

In view of the above, the need is felt to provide a system for removing air from the hydraulic fluid flowing within a hydraulic arrangement of a work vehicle.

Aim of the present invention is to satisfy the above-mentioned need in an optimized and cost-effective manner.

### SUMMARY OF THE INVENTION

The aforementioned aims are reached by a hydraulic system and by a work machine as claimed in the appended set of claims.

### BRIEF DESCRIPTION OF DRAWINGS

For a better understanding of the present invention, a preferred embodiment is described in the following, by way of a non-limiting example, with reference to the attached drawings, wherein:
- Figure 1 is a schematic view of a hydraulic system according to the present invention;
- Figure 2 is a perspective view of a component of the hydraulic system illustrated in Figure 1; and
- Figure 3 is a cross-section, according to the section plane III-III, of the component illustrated in Figure 2.

### DETAILED DESCRIPTION OF THE INVENTION

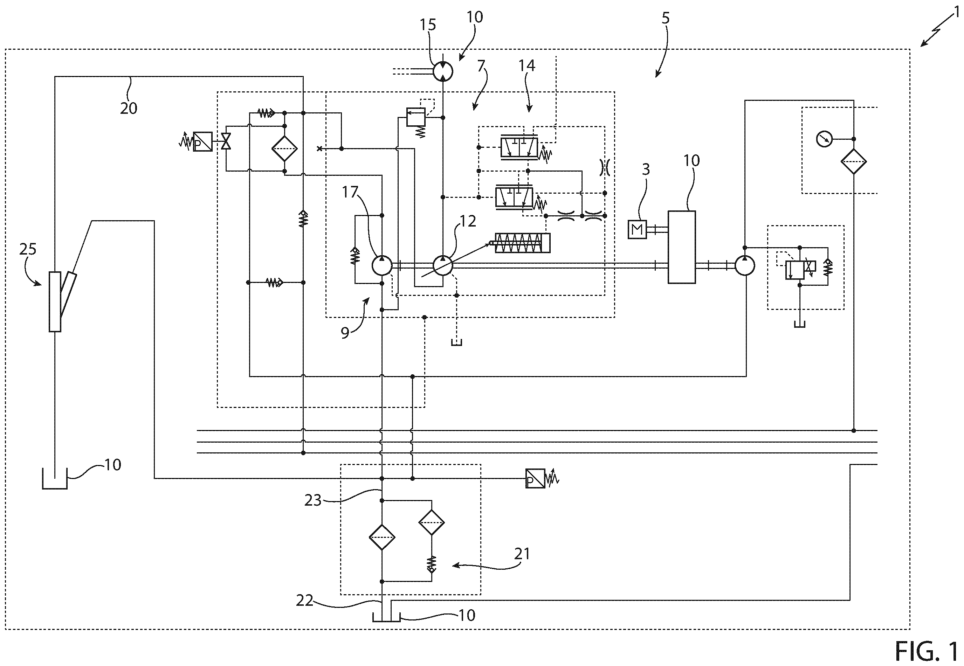

With reference to Figure 1, number 1 denotes, as a whole, a work vehicle, in particular an off-highway vehicle such as an agricultural vehicle, an earth moving machine, a telehandler or the like.

Work machine 1 comprises a body (not illustrated) movable on the ground via ground engaging wheels or tracks (not illustrated).

As known, work vehicle 1 further comprises an engine 3, which is operatively connected to the ground engaging wheels or tracks and is adapted to provide torque to allow motion of the work vehicle body with respect to the ground.

Engine 3 is preferably an internal combustion engine, such as a diesel or a methane powered internal combustion engine. Alternatively, engine 3 may be an electric motor.

In addition, work vehicle 1 may comprise a hydraulic system 5 configured to be powered by pressurized hydraulic fluid to perform an operation, for instance to provide torque to allow motion of work vehicle 1, to steer the ground engaging wheels of work vehicle 1, to actuate a hydraulically actuated work implement of work vehicle 1 or the like.

With reference to the exemplary embodiment illustrated in Figure 1, hydraulic system 5 may comprise a hydraulically actuated drivetrain or transmission 7 of work vehicle 1.

In particular, hydraulically actuated transmission 7 may comprise a continuously variable transmission (CVT) (only partially illustrated in Figure 1).

Alternatively or in addition, hydraulic system 5 may comprise a power-steering system, a hydraulically actuated braking device, a hydraulically actuated work implement and/or the like.

With reference to the exemplary embodiment illustrated in Figure 1, hydraulic system 5 comprises a source of pressurized hydraulic fluid 9, which is configured to suck hydraulic fluid from a tank 11 via a suction line 11a and to provide at outlet a pressurized flow of said hydraulic fluid.

Preferably, the source of pressurized hydraulic fluid 9 preferably comprises a pumping assembly carried by engine 3 via a transmission system 10, in order to be driven in rotation.

In addition, hydraulic system 5 comprises at least one hydraulic utility 10, which is fluidly connected downstream the source of pressurized hydraulic fluid 7 and is configured to receive the pressurized flow of the hydraulic fluid to be powered.

With reference to the exemplary embodiment illustrated in Figure 1, the source of pressurized hydraulic fluid 9 preferably comprises at least one main hydrostatic pump 12, in particular a variable displacement hydrostatic pump.

Preferably, main hydrostatic pump 12 is a load-sensing pump and comprises a load-sensing hydraulic piloting circuit 14, which is configured to control the displacement of the pump 12 according to the actual operating condition of the hydraulic system 5, in a manner per se known and therefore not further described.

The hydraulic utility 10 preferably comprises a hydrostatic motor 15, which is fluidly connected to main hydrostatic pump 12 in order to be driven in rotation and transmit torque to the ground engaging wheels.

With reference to the exemplary embodiment illustrated in Figure 1, the source of pressurized hydraulic fluid 9 preferably further comprises a hydrostatic pump 17, also referred to as charging pump or as anti-cavitation auxiliary pump, which is adapted to suck the hydraulic fluid from tank 11 and to feed a pressurized flow of the hydraulic fluid towards the inlet/suction/intake of hydrostatic pump 12, so as to keep the same inlet of the hydrostatic pump 12 pressurized and avoid cavitation of the hydraulic fluid sucked by hydrostatic pump 12.

In addition, hydraulic system 5 comprises a hydraulic filtering device 21, which is fluidly interposed between tank 11 and the source of pressurized hydraulic fluid 9 and is configured to filter the hydraulic fluid sucked by the same source of pressurized hydraulic fluid 9.

In particular, the inlet of filtering device 21 is preferably fluidly connected to tank 11 via a line 22. The outlet of filtering device 21 is preferably fluidly connected to the inlet of charging pump 17 via a line 23.

With reference to the exemplary embodiment illustrated in Figure 1, hydraulic system 5 further comprises a suction device 25, which is fluidly interposed between the source of pressurized hydraulic fluid 9 and tank 11 and is configured to suck the hydraulic fluid at a suction line 11a fluidly connecting tank 11 with the inlet of source of pressurized hydraulic fluid 9 by means of vacuum pressure.

In particular, suction device 25 is preferably configured to suck the hydraulic fluid out of the hydraulic filtering device 21 by means of vacuum pressure.

More in detail, suction device 25 is preferably fluidly interposed between the outlet of charging pump 17 and tank 11 and is adapted to be crossed by the hydraulic fluid, hereinafter referred to also as motive medium, provided at outlet by charging pump 17.

In other words, the outlet of charging pump 17 is fluidly connected both to the inlet of main hydrostatic pump 12 and to the inlet of suction device 25.

Suction device 25, in particular, is fluidly connected in parallel to hydraulic utility 5.

Suction device 25 is configured to suck from, advantageously immediately downstream and/or immediately upstream the hydraulic filtering device 21, a part of the hydraulic fluid exciting from the same filtering device 21 and directed towards the source of pressurized hydraulic fluid 9, in order to remove the air bubble present within the same hydraulic fluid.

In other word, suction device 25 is configured to suck the air present within the hydraulic fluid exciting from hydraulic filtering device 21 and redirect the same air back to tank 11.

With reference to the exemplary embodiment illustrated in Figure 1, 2 and 3, suction device 25 is configured as a venturi jet pump.

In particular, suction device 25 comprises a body 26, which extends along a reference axis A and is internally hollow. More in detail, body 26 is substantially Y-shaped.

In addition, body 26 is preferably monolithic and is preferably made of plastic material.

Body 26 comprises an inlet opening 28, which is configured to be fluidly connected to the outlet of source of pressurized hydraulic fluid 9 via a hydraulic line 20 and an outlet opening 29, which is configured to be fluidly connected to tank 11.

More in detail, inlet opening 28 is preferably fluidly connected to the outlet of charging pump 17, so as to be able to receive part of the hydraulic fluid provided at outlet by charging pump 17.

Preferably, inlet opening 28 and outlet opening 29 are realized on opposite axial ends of body 26.

In addition, body 26 preferably comprises an inner chamber 30, which fluidly connects inlet opening 28 and outlet opening 29 and extends along reference axis A.

In use, chamber 30 is configured to be crossed by the pressurized hydraulic fluid or motive medium coming from the source of pressurized hydraulic fluid 9, in particular from charging pump 17, and directed to tank 11, and entering inner chamber 30 via inlet opening 28 and exiting the same inner chamber 30 via outlet opening 29.

Preferably, body 26 comprises also a suction opening 31, which is configured to be fluidly connected to hydraulic filtering device 21.

More in detail, suction opening 31 is preferably configured to be fluidly connected to line 23 immediately downstream hydraulic filtering device 21.

Alternatively or in addition, suction opening 31 is preferably configured to be fluidly connected to line 22 immediately upstream hydraulic filtering device 21.

Suction opening 31 is preferably fluidly connected to chamber 30 via a conduit/pipe 32 defined by body 26 and extending transversally with respect to reference axis A.

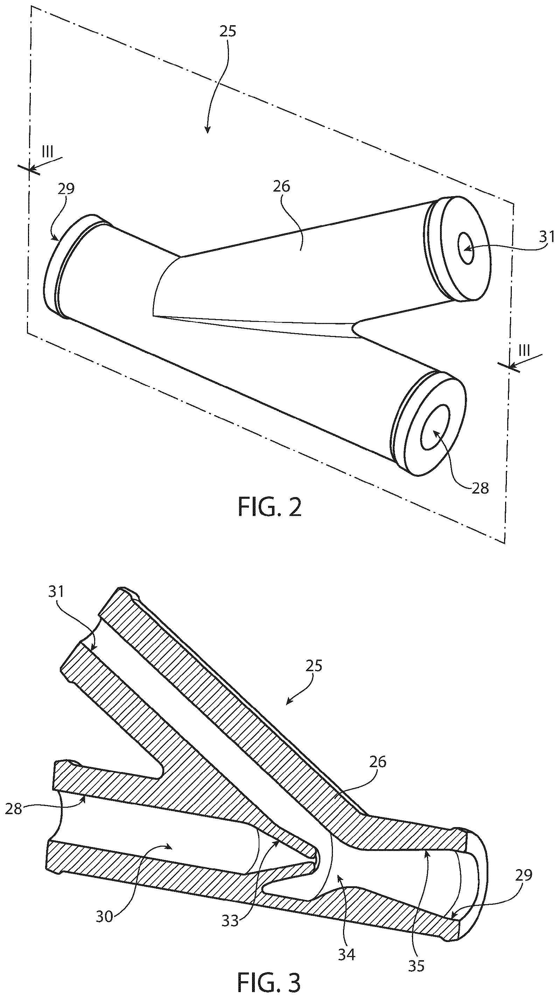

With reference to the exemplary embodiment illustrated in Figure 3, inner chamber 30 preferably comprises a venturi-effect mixing channel 34, which is configured to be crossed by the hydraulic fluid coming from the source of pressurized hydraulic fluid 9 and entering within inner chamber 30 via inlet opening 28 and exiting via outlet opening 29.

In addition, venturi-effect mixing channel 34 is configured to suck hydraulic fluid from hydraulic filtering device 21 via suction opening 31, in particular the air present within such hydraulic fluid via, the venturi effect, i.e., by vacuum pressure.

More in detail, venturi-effect mixing channel 34 is preferably provided with a restricted/narrowed section 33, which has a restricted cross section with respect to reference axis A and is configured to cause locally the acceleration of the flow of hydraulic fluid and consequently a sudden drop in the pressure of the same flow of hydraulic fluid.

Suction opening 31 is preferably fluidly connected to chamber 30, in particular to the venturi-effect mixing channel 34, immediately downstream the restricted/narrowed section 33, in order to be able to suck the hydraulic fluid from hydraulic filtering device 21 thanks to the vacuum generated within inner chamber 30 by the flow of hydraulic fluid crossing the same inner chamber 30 from inlet opening 28 towards outlet opening 29.

In addition, chamber 30 is preferably provided with an enlarged portion 35, which is located at the outlet opening 29, downstream venturi-effect mixing channel 34 along reference axis A, and has an enlarged cross section with respect to the venturi-effect mixing channel 34.

Enlarged portion 35 is configured to slow down locally the flow of hydraulic fluid or motive medium along chamber 30, in order to increase the pressure of the same hydraulic fluid.

The operation of the above described hydraulic system 5 is the following.

In use, the engine 3 drives into rotation both the main hydrostatic pump 12 and the charging pump 17.

Charging pump 17 suck hydraulic fluid from tank 11 and provides a pressurized flow of such hydraulic fluid to the inlet of main hydrostatic pump 12.

Main hydrostatic pump 12, in turn, provides at outlet, a pressurized flow of hydraulic fluid to the hydraulic utility 5, for instance to the hydrostatic motor 15 of the continuously variable transmission 7.

At the same time, a part of the hydraulic fluid provided at outlet by charging pump 17 is fed towards the suction device 25, so as to cross the latter and be discharged within tank.

This allows to create a vacuum within the suction device 25, in order to suck out immediately downstream filtering device 21 a portion of hydraulic fluid sucked by charging pump 17 from tank and also the air contained within the same hydraulic fluid, in order to de-aerate the hydraulic fluid provided towards hydraulic system 5.

In view of the foregoing, the advantages of the hydraulic system 5 according to the invention are apparent.

In particular, the provision of a suction device configured as a venturi jet pump allows to remove the air present within the hydraulic fluid directed towards the hydraulic system 5 in a simple and cost-effective manner, as it does not require the presence of dedicated vacuum pumps and/or other similar mechanisms.

In addition, the connection of the suction opening 31 of the suction device 25 immediately downstream tank 11 and filtering device 21 allows to de-aerate the hydraulic fluid before it can reach the hydraulic system 5, right at the location wherein the most of the air accumulates in the same hydraulic fluid. Indeed, most of the air contaminating the hydraulic fluid accumulates at tank 11 and within the hydraulic filtering device 1 arranged immediately afterwards.

It is clear that modifications can be made to the described hydraulic system 5 and to the related work vehicle 1, which do not extend beyond the scope of protection defined by the claims.

For instance, hydraulic system 5 may be realized with a different topology or comprising further/different hydraulic devices with respect to the above-described embodiment.

In addition, hydraulic suction device 25 may have a modular structure and may comprise more pieces/modules connectable to each other.

## Claims

1. A hydraulic system (5) for a work vehicle (1) comprising:
• a source of pressurized hydraulic fluid (9), which is configured to suck hydraulic fluid from a tank (11) via a suction line (11a) and to provide at outlet a pressurized flow of said hydraulic fluid;
• a hydraulic utility (10), which is fluidly connected downstream said source of pressurized hydraulic fluid (9) and is configured to receive the pressurized flow of said hydraulic fluid; and
• a suction device (25), which is fluidly interposed between said source of pressurized hydraulic fluid (9) and said tank (11), is configured to suck hydraulic fluid out from said suction line (11a) by means of vacuum pressure and is configured as a venturi jet-pump.

2. Hydraulic system according to claim 1, further comprising a hydraulic filtering device (21), which is operatively interposed between said tank (11) and said source of pressurized hydraulic fluid (9) and is configured to filter the hydraulic fluid sucked by said source of pressurized hydraulic fluid (9);
said suction device (25) being configured to suck out hydraulic fluid at said filtering device (21) by means of vacuum pressure.

3. Hydraulic system (5) according to claim 2, wherein said suction device (25) is configured to suck said hydraulic fluid immediately upstream and/or immediately downstream said filtering device (21).

4. Hydraulic system according to claim 2 or 3, wherein said suction device (25) comprises a body (26), which extends along a reference axis (A) and is internally hollow;
said body (25) being provided with: an inlet opening (28) at a first axial end of said body (26), which is configured to be fluidly connected to the outlet of said source of pressurized hydraulic fluid (9); an outlet opening (29) at a second axial end of said body (26) opposite to said first axial end, which is configured to be fluidly connected to said tank (11); and an inner chamber (30), which fluidly connects said inlet opening (28) and said outlet opening (29).

5. Hydraulic system according to claim 4, wherein said body (26) further comprises a suction opening (31), which is configured to be fluidly connected at said hydraulic filtering device (21).

6. Hydraulic system according to claim 5, wherein said suction opening (31) is configured to be fluidly connected immediately downstream said hydraulic filtering device (21) or immediately upstream said hydraulic filtering device (21).

7. Hydraulic system according to claim 5 or 6, wherein said inner chamber (30) comprises a venturi-effect mixing channel (34), which is configured to be crossed by the hydraulic fluid entering via said inlet opening (28) and exiting via said outlet opening (29), and is configured to suck by means of vacuum pressure the hydraulic fluid from said hydraulic filtering device (21) via said suction opening (31).

8. Hydraulic system according to claim 7, wherein said venturi-effect mixing channel (34) is provided with a restricted/narrowed cross section (33) with respect to said reference axis (A) and is configured to cause locally the acceleration of the flow of said hydraulic fluid and consequently a sudden drop in the pressure of the same flow of hydraulic fluid; and
wherein said inner chamber (30) is provided with an enlarged portion (35), which is located at said outlet opening (29), downstream said venturi-effect mixing channel (34) along said reference axis (A), and has an enlarged cross section with respect to said venturi-effect mixing channel (34).

9. Hydraulic system according to any of claims from 5 to 8, wherein said source of pressurized hydraulic fluid (9) comprises a main hydrostatic pump (12) configured to provide at outlet a pressurized flow of hydraulic fluid towards said hydraulic utility (10), and a charging pump (17) configured to be fluidly connected upstream said main hydrostatic pump (12) and configured to suck hydraulic fluid from said tank (11) and to provide at outlet a pressurized flow of hydraulic fluid towards said main hydrostatic pump (12);
said suction device (25) being fluidly interposed between the outlet of said charging pump (17) and said tank (11), in parallel with respect to said main hydrostatic pump (12) and said hydraulic utility (10).

10. Hydraulic system according to claim 9, wherein said inlet opening (28) is fluidly connected to the outlet of said charging pump (17), in parallel with respect to said main pump (12) and said hydraulic utility (10).

11. A work vehicle (1) comprising a hydraulic system (5) realized according to any of the preceding claims.
